# EUROPEAN PATENT APPLICATION

(11) **EP 3 540 286 A1**
(43) Date of publication of application: **18.09.2019**
(21) Application number: 19250003.1
(22) Date of filing: 05.03.2019
(51) Int. Cl.: F16L 41/02, F16K 15/20, A47C 27/08

(54) **AN ADAPTOR FOR USE IN INFLATING AN INFLATABLE WATERCRAFT**

(30) Priority: 15.03.2018 GB 201804161; 19.06.2018 GB 201810033
(71) Applicant: Red Paddle Co Limited, Halwell, Totnes Devon TQ9 7LQ (GB)
(72) Inventor: Hawthorne, Philip Thomas, Modbury, Devon PL21 0TY (GB)
(74) Representative: Jones, Graham Henry

(57) **Abstract**

An adaptor (118) for use in inflating an inflatable watercraft (52), which adaptor (118) comprises:
(i) first connector means (120) configured for connecting to a first inflation device (56);
(i) second connector means (122) configured for connecting to a second inflation device (60); and
(ii) third connector means (62) configured for connecting to the inflatable watercraft (52),
and wherein the adaptor (118) enables the first and second connector means 120,122) to be connected to the first and second inflation devices (56, 60), whereby the first and second inflation devices (56, 60) are able to be used to inflate the inflatable watercraft (52). (FIG. 5)

## Description

This invention relates to an adaptor and, more especially, this invention relates to an adaptor for use in inflating an inflatable watercraft.

Adaptors for use in inflating an inflatable watercraft are known. The known adaptors are connected to a single inflation device. The inflation device may be, for example, a hand pump, an electric pump, an e-pump, or a compressor such for example as a commercial compressor. Inflatable watercraft require a considerable volume of air in order to be inflated. Thus the inflation of the inflatable watercraft takes time. If the inflation device is a hand pump or other manually operated device, then a user of the inflatable watercraft may become tired even before they start to use the inflatable watercraft, for example by beginning paddling. In addition, irrespective of what type of inflation device is being employed, the actual inflation period may be substantial, and it may be longer than would be preferred by the user.

It is an aim of the present invention to reduce the above mentioned problem.

Accordingly, in one non-limiting embodiment of the present invention there is provided an adaptor for use in inflating an inflatable watercraft, which adaptor comprises:
(i) first connector means configured for connecting to a first inflation device;
(ii) second connector means configured for connecting to a second inflation device; and
(iii) third connector means configured for connecting to the inflatable watercraft,
and wherein the adaptor enables the first and second connector means to be connected to the first and second inflation devices, whereby the first and second inflation devices are able to be used to inflate the inflatable watercraft.

The adaptor of the present invention is advantageous in that the inflatable watercraft is able to be inflated via two inflation devices rather than one inflation device. The two inflation devices may be the same or they may be different. Thus, for example, the first and second inflation devices may both be hand pumps. In this case two persons will be required to operate the two hand pumps. Alternatively, the two inflation devices may be one hand pump and one electric pump. In this case, only one person may be required to inflate the inflatable watercraft, with the person first turning on the electric pump, and then using the hand pump. Alternatively, if desired, the two inflation devices may be one hand pump and one compressor such for example as a commercial compressor. Whatever combination of first and second inflation devices is employed, time will invariably be saved, and over exertion can be avoided if one or more hand pumps are used.

The adaptor may be one in which the first and second connector means extend towards each other and define therebetween an acute angle. The acute angle may be, for example, 45° or any other suitable angle.

The adaptor may be one in which the first connector means extends along a longitudinal axis of the adaptor, and in which the second connector means extends at an angle to the longitudinal axis. Any suitable angle may be employed.

The first connector means may be a female connector means. The first connector means may alternatively be a male connector means. When the first connector means is a female connector means, then the female connector means may form part of a bayonet connector. Other types of female connector means may be employed. When the first connector means is a male connector means, then the male connector means may be an externally ribbed push-in formation for being held in position by an adhesive. Alternatively, when the first connector means is a male connector means, then the male connector means may be a Schrader connector. Other types of male connector means may be employed, for example the male part of a bayonet connector, or types of screw threaded connector other than a Schrader connector.

Preferably, the second connector means is a female connector means. If desired, the second connector means may be a male connector means. When the second connector means is a female connector means, then the female connector means may form part of a bayonet connector. Other types of female connector means may be employed. When the second connector means is a male connector means, then the male connector means may be an externally ribbed push-in formation for being held in position by an adhesive. Alternatively, when the second connector means is a male connector means, then the male connector means may be a Schrader connector. Other types of male connectors may be employed, for example the male part of a bayonet connector, or types of screw threaded connector other than a Schrader connector.

Preferably, the third connector means a male connector means. If desired however the third connector means may be a female connector means. The male connector means may comprise part of a bayonet connector, or it may be a screw threaded male connector means. Other types of third connector means may be employed, for example those mentioned above for the first and second connector means.

The present invention also extends to an adaptor when connected to the first and second inflation devices.

The present invention further extends to the adaptor when connected to the inflatable watercraft. In this instance, the adaptor may or may not also be connected to the first and second inflation devices.

The inflatable watercraft is preferably an inflatable paddle board. The inflatable paddle board is preferably a stand-up inflatable paddle board. Other types of inflatable paddle boards may be employed. The inflatable watercraft may alternatively be an inflatable canoe or some other type of inflatable watercraft.

Embodiments of the invention will now be described solely by way of example and with reference to the accompanying drawings in which:
Figure 1 shows a known adaptor in use inflating an inflatable watercraft;
Figure 2 is an enlarged view of the adaptor shown in Figure 1;
Figure 3 shows a first adaptor of the present invention in use in inflating an inflatable watercraft;
Figure 4 is an enlarged view of the adaptor shown in Figure 3;
Figure 5 shows a second adaptor of the present invention in use in inflating an inflatable watercraft;
Figure 6 is an enlarged view of the adaptor shown in Figure 5;
Figure 7 is an enlarged view like Figure 6 but shows a third adapter of the present invention; and
Figure 8 is an enlarged view like Figure 6 but shows a fourth adapter of the present invention.

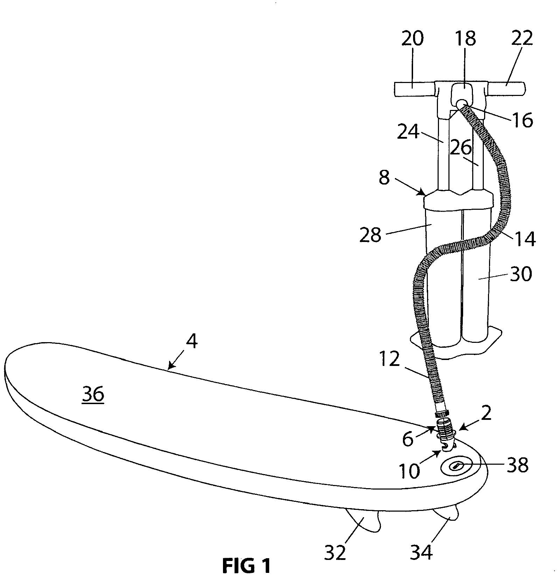

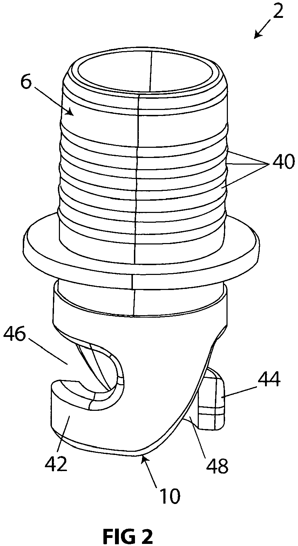

Referring to Figures 1 and 2, there is shown a known adaptor 2 for use in inflating a known inflatable watercraft 4. The adaptor 2 comprises connector means 6 configured for connecting to an inflation device 8. The adaptor 2 also comprises connector means 10 for connecting to the inflatable watercraft 4.

The adaptor 2 enables the connector means 6 to be connected to the inflation device 8. More specifically, the connector means 6 connects to a first end 12 of a hose 14. The hose 14 has a second end 16 which connects to an inlet region 18 of the inflation device 8. As shown, the inflation device 8 is a manually operated inflation device 8 in the form of a pump having a pair of hand grips 20, 22. The hand grips 20, 22 operate shafts 24, 26 connected to piston arrangements (not shown) operating in cylinders 28, 30.

The inflatable watercraft 4 is a stand-up inflatable paddle board having fins 32, 34 and a deck 36. The inflatable watercraft 4 is inflated via an inlet 38. The inlet 38 connects to the connector means 10.

The inflatable watercraft 4 requires a substantial volume air in order to be inflated to a rigid condition ready for use. The inflation device 8 may need to be operated for a period of time, and which is sufficiently long to tire a user and/or occupy more time than the user would prefer. If the user becomes unduly fatigued, then this may adversely affect the user's subsequent enjoyment of use of the inflatable watercraft 4.

As best seen from Figure 2, the connector means 6 is a male connector means having ribs 40 for facilitating insertion into the first end 12 of the hose 14 and retention therein by an adhesive. The connector means 10 is a bayonet-type connector means having two body portions 42, 44. The body portions 42, 44 each has a curved slot 46, 48 respectively.

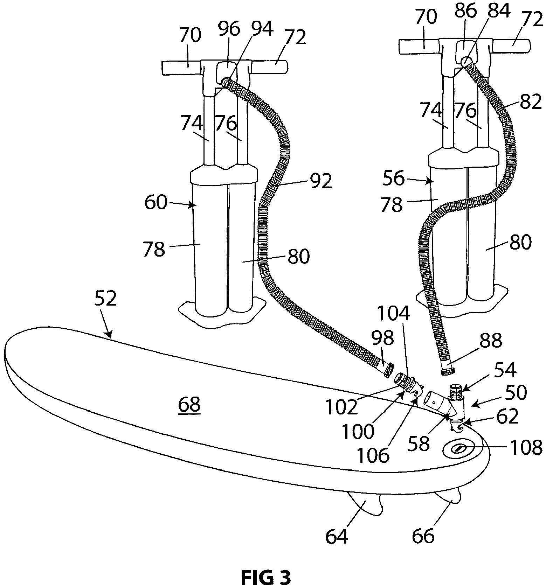

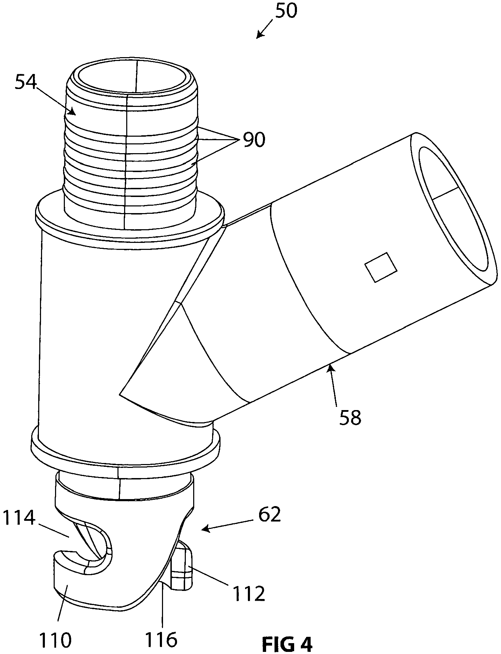

Referring now to Figures 3 and 4, there is shown a first adaptor 50 of the present invention. The adaptor 50 is for use in inflating an inflatable watercraft 52. The adaptor 50 comprises first connector means 54 configured for connecting to a first inflation device 56. The adaptor 50 also comprises second connector means 58 configured for connecting to a second inflation device 60. The adaptor 50 further comprises third connector means 62 configured for connecting to the inflatable watercraft 52.

The adaptor 50 is such that it enables the first and second connector means 54, 58 to be connected to the first and second inflation devices 56, 60 whereby the first and second inflation devices 56, 60 are able to be used to inflate the inflatable watercraft 52. More specifically, the first and second inflation devices 56, 60 can be operated by first and second persons (not shown).

The inflatable watercraft 52 has fins 64, 66 and a deck 68. The first and second inflation devices 56, 60 are each in the form of hand pumps having hand grips 70, 72 which are connected to shafts 74, 76. The shafts 74, 76 are connected to pistons (not shown) which operate in cylinders 78, 80. A hose 82 connects at a first end 84 to an inlet region 86 of the first inflation device 56. A second end 88 of the hose 82 connects to the first connector means 54. The first connector means 54 is a male first connector means 54 having ribs 90 for enabling the first connector means 54 to be pushed into the second end 88 of the hose 80 and secured therein by means of an adhesive.

A hose 92 has a first end 94 which connects to an inlet region 96 of the second inflation device 60. The hose 92 has a second end 98 which connects to an auxiliary adaptor member 100. More specifically, the auxiliary adaptor member 100 has a male connector end 102 having ribs 104 for enabling the male connector end 102 to be pushed into the second end 98 of the hose 92 and retained therein by means of an adhesive. The auxiliary adaptor member 100 also has a male connector end 106 which is in the form of a bayonet connector portion as shown. The male connector end 106 inserts into the open adjacent end of the second connector means 58 which has a complementary bayonet connector configuration. A simple rotational movement thus connects the male connector 106 in position in the second connector means 58.

The inflatable watercraft 52 has an inlet 108 which receives the third connector means 62. As best shown in Figure 4, the third connector means 62 comprises body portions 110, 112. Each body portion 110, 112 has a curved slot 114, 116.

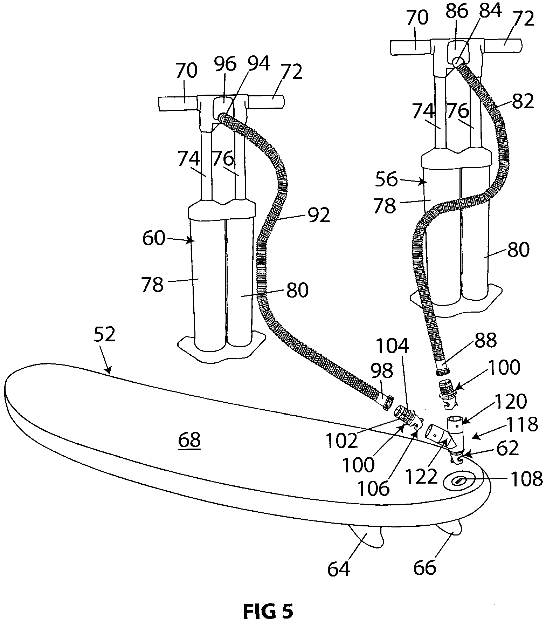

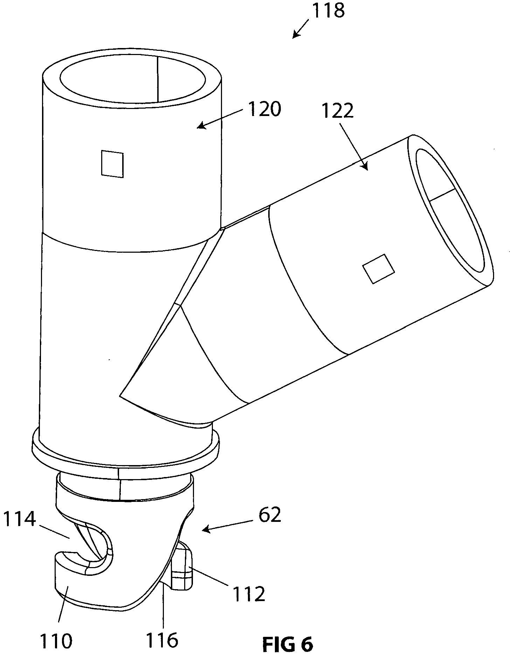

Referring now to Figures 5 and 6, there is shown a second adaptor 118 for use in inflating the inflatable watercraft 52. Similar parts as in previous Figures have been given the same reference numerals for ease of comparison and understanding. As can be seen from Figures 5 and 6, the second adaptor 118 has first connector means 120 and second connector means 122. The first and second connector means 120, 122 are the same as each other and they are the same as the second connector means 58 in the first adaptor 50. Similar parts as in the first adaptor 50 have been given the same reference numerals for ease of comparison and understanding.

As can be seen from Figure 5, each of the first and second connector means 120, 122 requires one of the auxiliary adaptor members 100 to connect to the ends 88, 98 of the hoses 82, 92 respectively.

As can be seen from Figures 4 and 6, the first and second connector means 54, 58: 120, 122 extend towards each other and define therebetween an acute angle. Also, the first connector means 54, 120 extends along a longitudinal axis of the adaptor 50, 118, and the second connector means 58, 122 extends at an angle to the longitudinal axis. In Figure 4, the first connector means 54 is a male first connector means 54, and the second connector means 58 is a female second connector means 58. In Figure 6, the first and second connector means 120, 122 are both female first and second connector means 120, 122 and they are constructed to be the same as the second connector means 58. The third connector means 62 is a male third connector means 62 and it comprises part of a bayonet fitting as shown. The third connector means 62 enables quick and easy connection to the inflatable watercraft 52. The inflatable watercraft 52 is in the form of a stand-up inflatable paddle board as shown.

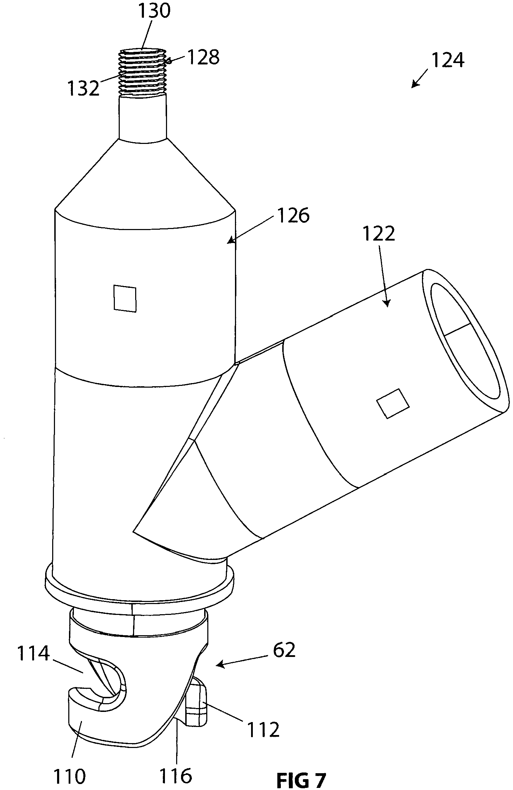

Referring now to Figure 7, there is shown a third adaptor 124 for use in inflating the inflatable watercraft 52. Similar parts as in Figure 6 have been given the same reference numerals for ease of comparison and understanding. From a comparison of Figures 6 and 7, it will be seen that the third adaptor 124 has the same second connector means 122 and the same third connector means 62 as the second adaptor 118. However, the first connector means 120 in the second adaptor 118 has been changed to a first connector means 126 in the third adaptor 124. The first connector means 126 has a Schrader connector part 128. The Schrader connector part 128 may comprise an internal Schrader valve 130 and a screw threaded end 132. The screw threaded end 132 enables the first connector means 126 to be connected to a bicycle pump, or any other type of pump that has a Schrader connector fitting. In a first modification of the third adaptor 124, the construction for the first connector means 126 could also be used for the second connector means 122, in which case the modified third adaptor 124 would have both the first connector means 126 and the second connector means 122 formed with the Schrader connector part 128. In a second modification of the third adaptor 124, the illustrated constructions for the first connector means 126 and the second connector means 122 could be reversed so that the first connector means 126 would have the shape of the illustrated second connector means 122, and the second connector means 122 would have the illustrated shape of the first connector means 126.

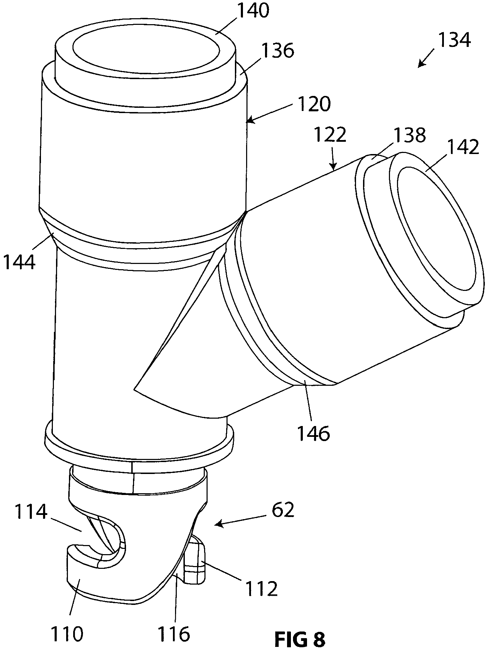

Referring to Figure 8, there is shown a fourth adapter 134. The adapter 134 is like the adapter 118 shown in Figure 6. Similar parts have been given the same reference numerals for ease of comparison and understanding. As can be seen from a comparison of Figures 6 and 8, the adaptor 134 is such that the first connector means 120 has a shoulder 136 at its free end. Similarly, the second connector means 122 has a shoulder 138 at its free end. The first connector means 120 has a reduced diameter portion 140, and the second connector means 122 has a reduced diameter portion 142. The adaptor 134 is also such that the first connector means 120 has a tapering portion 144, and the second connector means 122 has a tapering portion 146.

The reduced diameter portions 140, 142 are in the form of inserts which screw into the first and second connector means 120, 122. These inserts in the form of the reduced diameter portions 140, 142 hold in place a non-return valve (not shown). The reduced diameter portions 140, 142 are able to be unscrewed in order to facilitate replacement of the non-return valve and thereby repair of the adapter 134.

It is to be appreciated that the embodiments of the invention described above with reference to the accompanying drawings have been given by way of example only and that modifications may be effected. Thus, for example, different types of first connector, second connector means and third connector means may be employed. The first and second inflation devices may be other than those shown and they may be, for example, electric or e-pumps, compressors, or bicycle pumps. The inflation devices may be the same or different and in any required combination. The inflatable watercraft may be other than the illustrated stand-up paddle board 52 and it may alternatively be, for example, another type of inflatable paddle board or a canoe. The inflatable watercraft, for example the stand-up paddle board, may be made of those materials currently employed for making inflatable watercraft. In the case of the stand-up inflatable paddle board, drop-stitch material may be employed. Individual components shown in the drawings are not limited to use in the drawings and they may be used in other drawings and in all aspects of the invention. The invention also extends to the individual components mentioned above and/or shown above, taken singly or in any combination.

As used herein, SCHRADER is a Registered Trade Mark.

## Claims

1. An adaptor for use in inflating an inflatable watercraft, which adaptor comprises:
(i) first connector means configured for connecting to a first inflation device;
(ii) second connector means configured for connecting to a second inflation device; and
(iii) third connector means configured for connecting to the inflatable watercraft,
and wherein the adaptor enables the first and second connector means to be connected to the first and second inflation devices, whereby the first and second inflation devices are able to be used to inflate the inflatable watercraft.

2. An adaptor according to claim 1 in which the first and second connector means extend towards each other and define therebetween an acute angle.

3. An adaptor according to claim 1 or claim 2 in which the first connector means extends along a longitudinal axis of the adaptor, and in which the second connector means extends at an angle to the longitudinal axis.

4. An adaptor according to any one of the preceding claims in which the first connector means is a female connector means.

5. An adaptor according to claim 4 in which the female connector means forms part of a bayonet connector.

6. An adaptor according to any one of claims 1 - 3 in which the first connector means is a male connector means.

7. An adaptor according to claim 6 in which the male connector means is an externally ribbed push-in formation for being held in position by an adhesive.

8. An adaptor according to claim 6 in which the male connector means is a Schrader connector.

9. An adaptor according to any one of the preceding claims in which the second connector means is a female connector means.

10. An adaptor according to claim 9 in which the female connector means forms part of a bayonet connector.

11. An adaptor according to any one of claims 1 - 8 in which the second connector means is a male connector means.

12. An adaptor according to claim 11 in which the male connector means is an externally ribbed push-in formation for being held in position by an adhesive.

13. An adaptor according to claim 11 in which the male connector means is a Schrader connector.

14. An adaptor according to any one of the preceding claims in which the third connector means is a male connector means.

15. An adaptor according to claim 14 in which the male connector means comprises part of a bayonet connector.
